# EUROPEAN PATENT SPECIFICATION

(11) **EP 3 736 454 B1**
(45) Date of publication and mention of the grant of the patent: **15.12.2021**
(21) Application number: 19173940.8
(22) Date of filing: 10.05.2019
(51) Int. Cl.: F16B 5/02, F16B 37/08, F16B 39/00

(54) **RETAINING SYSTEM FOR VEHICLE COMPONENTS.**
HALTESYSTEM FÜR FAHRZEUGTEILE.
SYSTEME DE RETENUE POUR COMPOSANTS DE VEHICULE.

(43) Date of publication of application: 11.11.2020
(73) Proprietor: Illinois Tool Works, Inc., Glenview, Illinois 60025 (US)
(72) Inventor: YON, Fulvio Pacifico, 11020 HONE (AO) (IT)
(74) Representative: HGF

(56) References cited:
- US-A- 5 551 817

## Description

### Technical field

The present invention relates to a retaining system for fastening to the bodywork of vehicles functional components of a vehicle, such as panels or other trim elements to be placed inside or outside the passenger compartment, or soundproofing panels or elements, for example those that are to be fastened inside the engine compartments of vehicles. The invention also relates to an associated retaining element.

### Prior art

It is known that, in the motor vehicle field, numerous functional or trim components, usually in panel form, have to be fastened to the body (or to other bodywork parts).

These functional components are secured to a retaining element or a plurality of retaining elements, consisting of a threaded pin or pins that are formed integrally with the bodywork by welding for example, by means of associated retaining devices, usually consisting of a bush made of a synthetic plastic material and having internal flexible fins which are made in one piece with the bush from the same synthetic material, or from a different synthetic plastic material co-moulded with the bush, these fins being configured to engage the thread of the pin elastically, either by a snap fitting or by screwing/unscrewing, and the bush locking the functional element to be assembled against the body.

In order to provide greater flexibility in assembly/dismantling while reducing the cost and weight, retaining elements consisting of threaded pins made of a synthetic plastic material and having a head adapted for coupling by a snap or bayonet fitting to a hole in the body have also been developed. Thus the body does not have to be provided with projecting welded metal pins, but simply with holes, and the plastic threaded pins, which are lighter, are subsequently attached integrally to the body and are then used as in the preceding method, by coupling thereto a retaining device consisting of a bush provided internally with elastically flexible fins designed to interact with the thread of the plastic pin.

Both of the solutions described above have the advantage that the retaining device can be snap fitted on to the pin by simple pressure, and can then be detached by unscrewing when desired. However, they also both have the drawback that the retaining device may become partially unscrewed from the pin because of the vibrations to which the vehicle is subjected in use, causing a slackening of the pin/bush coupling that results in annoying noises, or even accidental detachment.

### Brief description of the invention

One object of the present invention is therefore to overcome the drawbacks of the prior art by providing a retaining system and an associated retaining element which are of simple construction and are reliable, space-saving and relatively inexpensive; which allow functional vehicle components to be fastened rapidly to the body of a vehicle for the specified purpose with a relatively low coupling force, but with a high retention capacity; and which are not subject to slackening due to vibrations of the vehicle during use, and therefore are substantially noise-free.

The present invention therefore relates to a retaining system and to an associated retaining element as defined in the appended claims.

### Brief description of the drawings

Further characteristics and advantages of the present invention will be made clear by the following description of a possible embodiment thereof, provided purely by way of non-limiting example and with reference to the attached drawings, in which:
- Figure 1 shows schematically a three-quarter perspective view from above of a retaining element made according to the invention;
- Figure 2 shows a plan view from above of the retaining element of Figure 1;

- Figures 3 and 4 show schematically respective views in section taken along the planes III-III and IV-IV of the retaining system of the invention in a configuration of use, using the retaining element of Figures 1 and 2 and an associated retaining device of a known type;
- Figure 5 shows on an enlarged scale a three-quarter perspective view from below of a detail of the retaining element of Figure 1; and
- Figure 6 shows on a more enlarged scale and in perspective a sectional view taken along a plane VI-VI of the detail of the retaining element of Figure 5.

### Detailed description

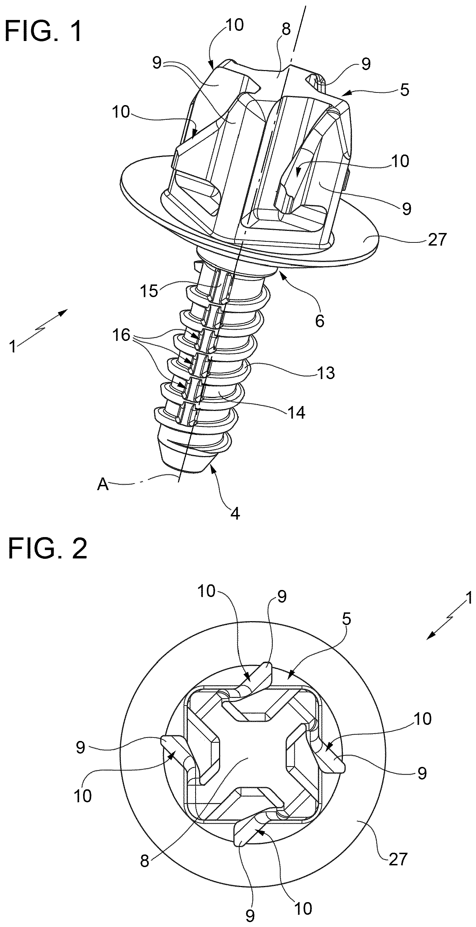

With reference to Figures 1 to 4, the reference number 1 indicates as a whole a retaining element for connecting a functional vehicle component 2, which in the non-limiting example illustrated consists of a vehicle trim panel which is known and is illustrated only schematically and only partially for the sake of simplicity, to a vehicle body element 3, shown only partially and only schematically for the sake of simplicity.

The retaining element 1 consists of a threaded pin fastened integrally, by the method to be described, to the body element 3.

For this purpose, the threaded pin or retaining element 1 comprises a threaded shank 4 and a head 5 positioned at a first end 6 of the threaded shank 5 and formed integrally with the threaded shank 5.

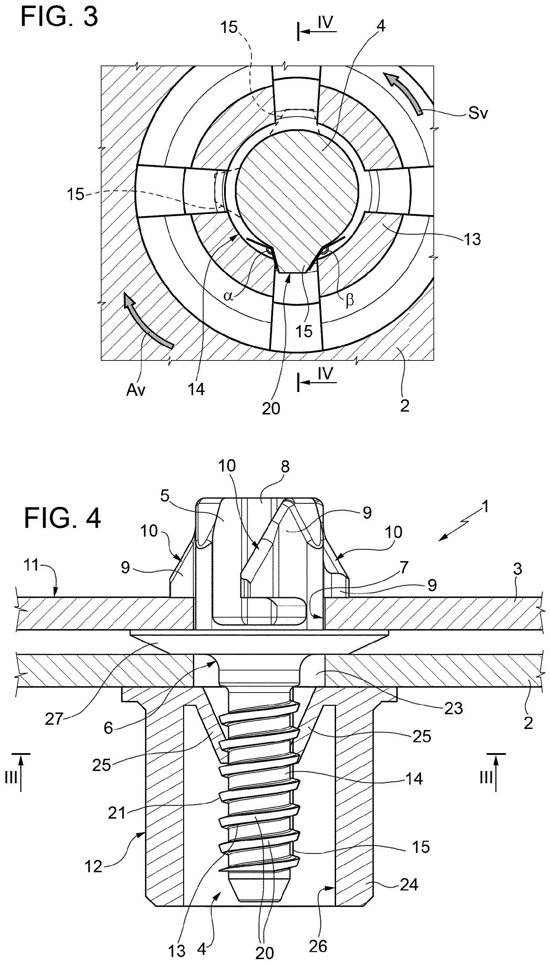

According to a first feature of the invention, the head 5 is configured for coupling in use, by snap or bayonet fitting, to a hole 7 (Figure 4), which may be round or preferably quadrangular, in the body element 3.

For this purpose, the head 5 comprises a rigid central core 8 and a plurality of elastically deformable fins 9 (numbering four, in an X-shaped arrangement, in the illustrated example), each of which is substantially Z-shaped in plan view, which extend radially and projectingly from the core 8 and each of which has an upper edge 10 arranged at an inclination relative to the threaded shank 4, the inclination being such as to intercept on the side of the head 5 (by a theoretical extension of the edge 10) an axis of symmetry A of the threaded shank 4.

The edge 10 is also shaped so as to have an angle of inclination relative to the axis A which is variable and such that it increases towards the threaded shank 4.

Thus the edge 10 is adapted to interact, in use, with a peripheral edge of the hole 7 to cause the fins 9 to bend elastically towards the core 8, the fins thus passing through the hole 7 together with the whole head 5 and then reopening with a snap action, as soon as they have passed through the hole 7, so as to place themselves to bear axially against a face 11 of the body element 3 opposite the functional component 2 to be fastened to the body element 3, and therefore opposite the threaded shank 4.

In its turn, the threaded shank 4 is configured to be coupled, in use, with a retaining device 12 (Figure 4) of a known type, which serves to lock the functional component 2 against the body element 3 on the opposite side to the face 11.

The retaining device 12 and the threaded shank 4 are configured to be coupled together either by rotation, by screwing and unscrewing, or by snap fitting, the latter only in insertion as a result of an axial force exerted in a direction parallel to the shank 3 and, therefore, exerted along the axis A and towards the head 5.

For this purpose, the threaded shank 4 is provided, over at least a part of its axial length L, with a continuous or discontinuous thread 13, which projects radially from a cylindrical lateral surface 14 of the shank 4, on which the thread 13 is wound in the form of a helix.

According to an important aspect of the invention, the shank 4 is provided with at least one longitudinal rib 15 which projects radially from the cylindrical lateral surface 14 with a height, measured radially, equal to or, preferably, lower than that of the thread 13.

This at least one longitudinal rib 15 extends along at least the greater part of the axial length L, and therefore also of an extension in length of the thread 13.

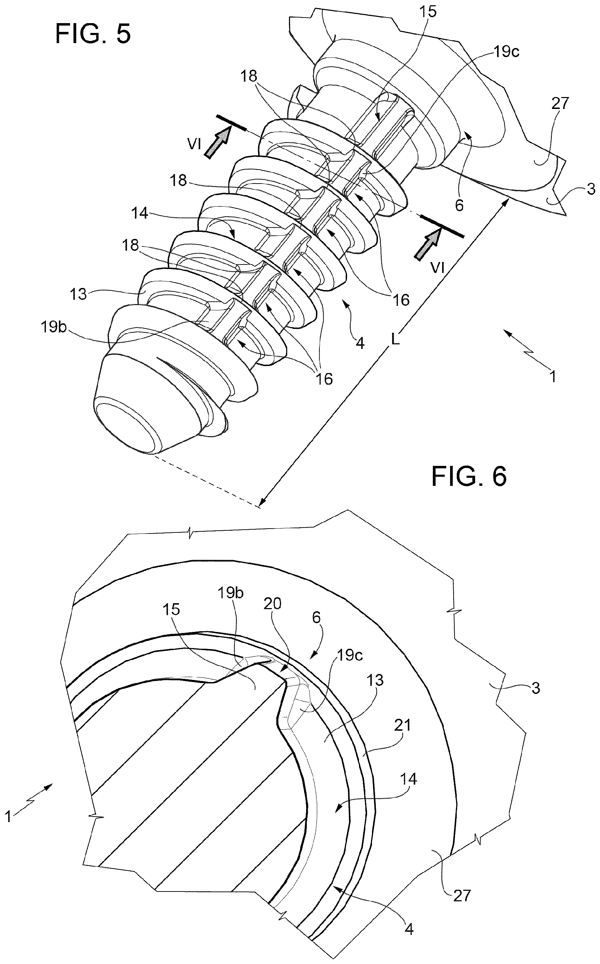

Additionally, the at least one longitudinal rib 15 is rectilinear and extends parallel to the axis of symmetry A of the shank 4, on a generatrix of the cylindrical lateral surface 14 of the shank 4, and is composed of a plurality of rectilinear portions 16 (Figure 5) positioned adjacent in sequence and in axis with one another, being separated from one another solely by respective helical portions 18 (Figure 5) of the thread 13.

The rectilinear portions 16 of the rib 15 preferably all have the same shape and the same height, measured radially.

According to an aspect of the invention, the at least one rib 15 has a trapezoidal shape with rounded vertices in cross section (Figure 6).

Preferably, the longitudinal rib 15 has an asymmetrical trapezoidal shape in cross section, in that respective opposed oblique sides 19b and 19c (Figure 6) of the cross section of the rib 15 each define a respective opposed lateral flank of the rib and have different inclinations.

A first oblique side 19b of the cross section of the rib 15, defining a first lateral flank of the rib, forms a first angle α with the cylindrical lateral surface 14 of the shank 4, while a second oblique side 19c of the cross section of the rib 15, opposed to the first side 19b and defining a second lateral flank of the rib 15, forms a second angle β, larger than the first angle a, with the cylindrical lateral surface 14 of the shank 4.

In particular, according to an aspect of the invention, the first angle α faces a direction of screwing Av for the thread 13, while the second angle β faces a direction of unscrewing Sv for the thread 13, in such a way that a torque (tangential force) required in use for screwing the shank 4 into the retaining device 12 is less than the torque required in use for unscrewing the shank 4 from the retaining device 12.

According to a possible variant, shown in broken lines in Figure 3, the shank 4 is provided with a plurality of longitudinal ribs 15, parallel to one another, which project radially from the cylindrical lateral surface 14, each over a height, measured radially, equal to or, preferably, lower than that of the thread 13, and which are arranged to be spaced apart from one another circumferentially at a regular or variable pitch.

According to an aspect of this variant, the height of each rib 15 increases progressively in the direction of screwing Av for the thread 13, and therefore decreases progressively in the direction of unscrewing Sv, in such a way that a torque (tangential force) required in use for screwing the shank 4 into the retaining device 12 is less than the torque required in use for unscrewing the shank 4 from the retaining device 12.

In both of the embodiments described, the rib 15 or ribs 15 project(s) radially from the cylindrical lateral surface 14 over a height such that a terminal end 20 of the rib or ribs 15 (Figures 3, 4 and 6), defined by a substantially flat or rounded face of the rib or ribs 15, positioned substantially parallel to a generatrix of the cylindrical lateral surface 14 of the shank 4, is positioned radially adjacent to a radially outer peak 21 (Figure 6) of the thread 13.

It is clear from the above description that the invention also relates to a retaining system, indicated as a whole by 22, for connecting a functional vehicle component 2 to a vehicle body element 3, comprising a first hole 7 in the body element 3; a second hole 23 (Figure 4), which is a through hole, in the functional component 2; the retaining element 1, consisting of a threaded shank 4 and a head 5 positioned at a first end 6 of the threaded shank 4 and formed integrally with the threaded shank 4, the head 5 being configured to be coupled by a snap or bayonet fitting to the first hole 7 and the threaded shank 4 being configured to be coupled by passing through the second hole 23; and a retaining device 12 for the functional component 2.

In the illustrated example, the retaining device 12 consists (Figure 4) of a bush 24 equipped internally with at least a pair of elastically deformable fins 25 configured to be coupled both by rotation by screwing and unscrewing, and by snap fitting as a result of an axial force exerted in a direction parallel to the threaded shank 4, that is to say exerted along the axis A, to the threaded shank 4 itself.

Since the threaded shank 4 is equipped over at least a part of its axial length with the continuous or discontinuous thread 13, which projects radially from the cylindrical lateral surface 14 of the shank 4, the fins 25 can not only allow both the screwing and unscrewing of the bush 24 on to/from the thread 13, but can also engage the peaks 21 by a pawl action, because of their projecting extension, inclined towards the direction of extraction of the bush 24 from the shank 4, enabling the bush 24 to be fitted by sliding, or more precisely by a pawl action, on to the shank 4, while preventing the extraction by sliding of the bush 24 from the shank 4, since, in the latter case, the fins 25 lock against the peaks 21.

As described above, the shank 4 is equipped with at least one longitudinal rib 15 which projects radially from the cylindrical lateral surface 14, preferably over a height, measured radially, which is less than that of the thread 13.

Additionally, in the retaining system 22 the fins 25 are configured to interact with opposed inclined lateral flanks 19b, 19c of the at least one rib 15, each of which has a first and a second inclination α and β respectively, which are different from one another, so as the fins are progressively bent towards a radially inner lateral wall 26 of the bush 24 as a result of a relative rotation between the bush 24 and the threaded shank 4, so that the fins 25 can ride with a snap action over the rib 15 or, if a plurality of ribs 15 are present, progressively and cyclically over all the ribs 15.

The first and second inclinations, forming respective angles α and β with the surface 14, are selected, according to an aspect of the invention, in such a way that the mechanical torque required to screw the shank 4 into the retaining device 12 is less than the mechanical torque required to unscrew the shank 4 from the retaining device 12.

According to an aspect of the invention, the retaining element 1 and the retaining device 12 are made entirely by moulding from a synthetic plastic material, and the fins 25 are made in one piece with the bush 24, while the head 5, the thread 13 and the rib or ribs 15 are made in one piece with the threaded shank 4.

According to a final aspect of the invention, the retaining element 1 further comprises a flange 27 made in the shape of a suction cup (Figure 4) positioned between the head 5 and the threaded shank 4; additionally, the flange 27 is made in one piece with the threaded shank 4 and projects radially therefrom until it extends radially on the outside of the head 5.

The suction cup flange 27 has a substantially frustoconical shape and a concavity facing the head 5.

The flange 27 is configured to be pressure-coupled to the body element 3 when the functional component 2 to be fastened is pushed by the retaining device 12 against the flange as a result of its coupling to the threaded shank 4. At the same time, the flange 27 is deformed elastically, exerting on the functional element 2 an elastic reaction which is transferred to the bush 24 of the retaining device 12, pushing the latter in the direction of disengagement from the shank 4, and therefore causing the fins 25 to lock against the thread 13 and its peaks 21.

Thus any play present in the retaining system 22 is taken up, preventing any vibration or noise of the components 1, 2 and 12 on the vehicle in use. At the same time, the rib 15 (or the ribs 15, if more than one of them is present) prevents any partial accidental unscrewing of the retaining device 12 due to the vibrations of the vehicle when running.

On the other hand, if the bush 24 is to be unscrewed, in order to remove the functional component 2 for example, it is simply necessary to unscrew the bush 24 by exerting a sufficient torque on it to cause the fins 25 to bend as a result of the inclination α of the oblique side 19b.

In order to couple the bush 24 on to the shank 4 by screwing, on the other hand, it will be sufficient to exert a torque that is much smaller than that required for unscrewing, owing to the larger angle β which enables the fins 25 to ride over the rib 15 more easily by sliding on the oblique side 19c.

All the objects of the invention are therefore achieved.

## Claims

1. Retaining element (1) for connecting a functional vehicle component (2) to a vehicle body element (3), comprising a threaded shank (4) and a head (5) positioned at a first end (6) of the threaded shank and formed integrally with the threaded shank, the head (5) being configured to be coupled in use, by snap or bayonet fitting, to a hole (7) in the body element (3); the threaded shank (4) being configured to be coupled in use to a retaining device (12) for the component either by rotation, by screwing and unscrewing, or by snap fitting, by pushing in a direction (A) parallel to the shank; the threaded shank (4) being provided over at least a part of its axial length with a continuous or discontinuous thread (13) which projects radially from a cylindrical lateral surface (14) of the shank, on which the thread (13) is wound in helical form;
**characterized in that** the shank (4) is equipped with at least one longitudinal rib (15) which projects radially from said cylindrical lateral surface (14) over a height, measured radially, which is equal to or, preferably, less than that of said thread (13).

2. Retaining element according to Claim 1, **characterized in that** said at least one longitudinal rib 15 extends along at least the greater part of an extension in length of said thread (13).

3. Retaining element according to Claim 1 or 2, **characterized in that** said at least one rib (15) is rectilinear and extends parallel to an axis of symmetry (A) of the shank (4), on a generatrix of said cylindrical lateral surface (14) of the shank, and is composed of a plurality of rectilinear portions (16) positioned adjacent in sequence and in axis with one another, being separated from one another solely by respective helical portions (18) of said thread, said rectilinear portions (16) of said at least one rib (15) all having the same shape and the same height measured radially.

4. Retaining element according to any of the preceding claims, **characterized in that** said at least one rib (15) has a trapezoidal shape with rounded vertices in cross section.

5. Retaining element according to Claim 4, **characterized in that** said at least one rib (15) has an asymmetrical trapezoidal shape in cross section, respective opposed oblique sides (19b, 19c) of said cross section, each defining a respective opposed lateral flank of the rib, having different inclinations (a and β).

6. Retaining element according to Claim 4 or 5, **characterized in that** a first oblique side (19b) of said cross section, defining a first lateral flank of the rib, forms a first angle (a) with said cylindrical lateral surface (14) of the shank, while a second oblique side (19c) of said cross section, opposed to the first and defining a second lateral flank of the rib, forms a secondo angle (β), larger than the first angle, with said cylindrical lateral surface (14) of the shank; said first angle facing towards a direction of screwing (Av) for said thread, while said second angle faces a direction of unscrewing (Sv) for said thread, in such a way that a torque required in use for screwing the shank (4) into said retaining device (12) is less than the torque required in use for unscrewing the shank (4) from said retaining device.

7. Retaining element according to Claim 4, **characterized in that** said shank (4) is provided with a plurality of longitudinal ribs (15), parallel to one another, which project radially from said cylindrical lateral surface (14), each over a height, measured radially, lower than that of said thread (13), and which are arranged to be spaced apart from one another circumferentially at a regular or variable pitch; the heights of each of said ribs increasing progressively in a direction of screwing for said thread (13), and consequently decreasing progressively in a direction of unscrewing for each thread, in such a way that a torque required in use for screwing the shank (4) into said retaining device is less than the torque required in use for unscrewing the shank from said retaining device.

8. Retaining element according to any of the preceding claims, **characterized in that** said at least one longitudinal rib (15) projects radially from said cylindrical lateral surface (14) over a height such that a terminal end of the rib, defined by a substantially flat or rounded face (20), positioned substantially parallel to a generatrix of said cylindrical lateral surface (14) of the shank, is positioned radially adjacent to a radially outer peak (21) of said thread.

9. Retaining system (22) for connecting a functional vehicle component (2) to a vehicle body element (3), comprising a first hole (7) in the body element (3); a second hole (23), which is a through hole, in the functional component; a retaining element (1) consisting of a threaded shank (4) and a head (5) positioned at a first end (6) of the threaded shank and formed integrally with the threaded shank, the head being configured to be coupled, by snap or bayonet fitting, to said first hole (7), and the threaded shank (4) being configured to be coupled to said second hole (23) by passing through it; and a retaining device (12) for the functional component, consisting of a bush (24) equipped internally with at least a pair of elastically deformable fins (25) configured to be coupled either by rotation, by screwing and unscrewing, or by snap fitting as a result of an axial force in a direction parallel to the threaded shank, to said threaded shank (4); the threaded shank being provided over at least a part of its axial length with a continuous or discontinuous thread (13) which projects radially from a cylindrical lateral surface (14) of the shank, on which the thread is wound in helical form;
**characterized in that** the shank is provided with at least one longitudinal rib (15) which projects from said cylindrical lateral surface (14) over a height, measured radially, which is equal to or less than that of said thread (13); said fins (25) being configured to interact with opposed inclined lateral flanks (19b, 19c) of said at least one rib (15), each of which has a first and a second inclination respectively, which are different from one another, so as to be progressively bent towards a radially inner lateral wall (26) of the bush as a result of a relative rotation between the bush and the threaded shank, so that the fins (25) can ride with a snap action over said at least one rib; said first and second inclinations being selected in such a way that a torque required to screw the shank (4) into said retaining device is less than the torque required to unscrew the shank from said retaining device.

10. Retaining system according to Claim 9, **characterized in that** said retaining element (1) and device (12) are made by moulding from a synthetic plastic material, said fins (25) being formed in one piece with said bush (24), while said head (5), said thread (13) and said at least one rib (15) are formed in one piece with said threaded shank (4) .

11. Retaining system according to Claim 9 or 10, **characterized in that** said retaining element (1) further comprises a flange (27) shaped in the form of a suction cup, positioned between the head (5) and the threaded shank (4), formed in one piece with the threaded shank and projecting radially from the latter so as to extend radially on the outside of the head; said suction cup flange (27) substantially having a frustoconical shape and a concavity facing said head; the flange being configured to be pressure-coupled to said body element (3) when the functional component to be fastened is pushed by said retaining device (12) against the flange, thus coupling the component to said threaded shank.

## Patentansprüche

1. Halteelement (1) zum Verbinden eines funktionalen Fahrzeugteils (2) mit einem Karosserieelement (3), aufweisend einen Gewindeschaft (4) und einen Kopf (5), der an einem ersten Ende (6) des Gewindeschaftes angeordnet und einstückig mit dem Gewindeschaft ausgebildet ist, der Kopf (5) ausgelegt ist, um im Gebrauch durch Schnapp- oder Bajonettverschluss mit einer Öffnung (7) in dem Körperelement (3) gekoppelt zu werden; der Gewindeschaft (4) ausgelegt ist, um im Gebrauch mit einer Haltevorrichtung (12) für die Komponente entweder durch Drehung, durch Auf- und Abschrauben oder durch Einrasten, durch Drücken in einer Richtung (A) parallel zum Schaft, gekoppelt zu werden; der Gewindeschaft (4) über zumindest einen Teil seiner axialen Länge mit einem durchgehenden oder diskontinuierlichen Gewinde (13) vorgesehen ist, das radial von einer zylindrischen Seitenfläche (14) des Schafts absteht, auf die das Gewinde (13) schraubenförmig gewickelt ist;
**dadurch gekennzeichnet, dass** der Schaft (4) mit zumindest einer Längsrippe (15) ausgestattet ist, die radial von der zylindrischen Seitenfläche (14) über eine radial gemessene Höhe vorsteht, die gleich oder vorzugsweise geringer als die des Gewindes (13) ist.

2. Halteelement nach Anspruch 1, **dadurch gekennzeichnet, dass** sich die zumindest eine Längsrippe 15 zumindest über den größeren Teil einer Längenausdehnung des Gewindes (13) erstreckt.

3. Halteelement nach Anspruch 1 oder 2, **dadurch gekennzeichnet, dass** die zumindest eine Rippe (15) geradlinig ist und sich parallel zu einer Symmetrieachse (A) des Schaftes (4) auf einer Mantellinie der zylindrischen Seitenfläche (14) des Schaftes erstreckt, und aus einer Vielzahl von geradlinigen Abschnitten (16) zusammengesetzt ist, die in Folge und in der Achse angrenzend zueinander angeordnet sind, wobei sie nur durch entsprechende schraubenförmige Abschnitte (18) des Gewindes voneinander getrennt sind, wobei die geradlinigen Abschnitte (16) der zumindest einen Rippe (15) alle die gleiche Form und die gleiche Höhe, gemessen in radialer Richtung, aufweisen.

4. Halteelement nach einem der vorhergehenden Ansprüche, **dadurch gekennzeichnet, dass** die zumindest eine Rippe (15) im Querschnitt eine Trapezform mit abgerundeten Scheiteln hat.

5. Halteelement nach Anspruch 4, **dadurch gekennzeichnet, dass** die zumindest eine Rippe (15) im Querschnitt eine asymmetrische Trapezform hat, wobei die jeweiligen gegenüberliegenden schrägen Seiten (19b, 19c) des Querschnitts, die jeweils eine entsprechende gegenüberliegende seitliche Flanke der Rippe definieren, unterschiedliche Neigungen (α und β) haben.

6. Halteelement nach Anspruch 4 oder 5, **dadurch gekennzeichnet, dass** eine erste schräge Seite (19b) des Querschnitts, die eine erste seitliche Flanke der Rippe definiert, einen ersten Winkel (α) mit der zylindrischen Seitenfläche (14) des Schafts ausbildet, während eine zweite schräge Seite (19c) des Querschnitts, die der ersten gegenüberliegt und eine zweite seitliche Flanke der Rippe definiert, einen zweiten Winkel (β), der größer als der erste Winkel ist, mit der zylindrischen Seitenfläche (14) des Schafts ausbildet; wobei der erste Winkel einer Einschraubrichtung (Av) für das Gewinde zugewandt ist, während der zweite Winkel einer Ausschraubrichtung (Sv) für das Gewinde zugewandt ist, sodass ein Drehmoment, das im Gebrauch zum Einschrauben des Schafts (4) in die Haltevorrichtung (12) erforderlich ist, geringer ist als das Drehmoment, das im Gebrauch zum Ausschrauben des Schafts (4) aus der Haltevorrichtung erforderlich ist.

7. Halteelement nach Anspruch 4, **dadurch gekennzeichnet, dass** der Schaft (4) mit einer Vielzahl von zueinander parallelen Längsrippen (15) vorgesehen ist, die von der zylindrischen Seitenfläche (14) jeweils über eine radial gemessene Höhe vorstehen, die geringer ist als die des Gewindes (13), und die so angeordnet sind, dass sie in Umfangsrichtung mit einer regelmäßigen oder variablen Steigung voneinander beabstandet sind; wobei die Höhen jeder der Rippen in einer Einschraubrichtung für das Gewinde (13) progressiv zunehmen und folglich in einer Ausschraubrichtung für jedes Gewinde progressiv abnehmen, sodass ein Drehmoment, das im Gebrauch zum Einschrauben des Schaftes (4) in die Haltevorrichtung erforderlich ist, geringer ist als das Drehmoment, das im Gebrauch zum Ausschrauben des Schaftes aus der Haltevorrichtung erforderlich ist.

8. Halteelement nach einem der vorhergehenden Ansprüche, **dadurch gekennzeichnet, dass** die zumindest eine Längsrippe (15) radial von der zylindrischen Seitenfläche (14) über eine Höhe vorsteht, sodass ein Abschlussende der Rippe, das durch eine im Wesentlichen flache oder abgerundete Fläche (20) definiert ist, die im Wesentlichen parallel zu einer Mantellinie der zylindrischen Seitenfläche (14) des Schafts angeordnet ist, radial angrenzend an eine radial äußere Spitze (21) des Gewindes angeordnet ist.

9. Haltesystem (22) zum Verbinden einer funktionellen Fahrzeugkomponente (2) mit einem Karosserieelement (3), aufweisend eine erste Öffnung (7) in dem Karosserieelement (3); eine zweite Öffnung (23), die eine Durchgangsöffnung ist, in der funktionalen Komponente; ein Halteelement (1), das aus einem Gewindeschaft (4) und einem Kopf (5) besteht, der an einem ersten Ende (6) des Gewindeschaftes angeordnet und einstückig mit dem Gewindeschaft ausgebildet ist, wobei der Kopf so ausgelegt ist, dass er durch einen Schnapp- oder Bajonettverschluss mit der ersten Öffnung (7) gekoppelt werden kann, und der Gewindeschaft (4) ausgelegt ist, um mit der zweiten Öffnung (23) gekoppelt zu werden, indem er durch sie verläuft; und eine Haltevorrichtung (12) für die funktionelle Komponente, die aus einer Buchse (24) besteht, die innen mit zumindest einem Paar elastisch verformbarer Rippen (25) ausgestattet ist, die so ausgelegt sind, dass sie entweder durch Drehung, durch Auf- und Abschrauben oder durch Einrasten infolge einer axialen Kraft in einer Richtung parallel zum Gewindeschaft mit dem Gewindeschaft (4) gekoppelt werden können; wobei der Gewindeschaft zumindest über einen Teil seiner axialen Länge mit einem kontinuierlichen oder diskontinuierlichen Gewinde (13) vorgesehen ist, das radial von einer zylindrischen Seitenfläche (14) des Schafts absteht, auf die das Gewinde schraubenförmig gewickelt ist;
**dadurch gekennzeichnet, dass** der Schaft mit zumindest einer Längsrippe (15) vorgesehen ist, die von der zylindrischen Seitenfläche (14) über eine radial gemessene Höhe vorsteht, die gleich oder geringer als die des Gewindes (13) ist; wobei die Rippen (25) so ausgelegt sind, dass sie mit entgegengesetzten schrägen seitlichen Flanken (19b, 19c) der zumindest einen Rippe (15) zusammenwirken, die jeweils eine sich voneinander unterscheidende erste und zweite Schräge aufweisen, sodass sie infolge einer relativen Drehung zwischen der Buchse und dem Gewindeschaft progressiv in Richtung einer radial inneren Seitenwand (26) der Buchse gebogen werden, sodass die Rippen (25) mit einer Schnappwirkung über die zumindest eine Rippe gleiten können; wobei die erste und die zweite Schräge so gewählt sind, dass ein Drehmoment, das zum Einschrauben des Schaftes (4) in die Haltevorrichtung erforderlich ist, geringer ist als das Drehmoment, das zum Herausschrauben des Schaftes aus der Haltevorrichtung erforderlich ist.

10. Haltesystem nach Anspruch 9, **dadurch gekennzeichnet, dass** das Halteelement (1) und die Vorrichtung (12) durch Formen aus einem synthetischen Kunststoffmaterial hergestellt sind, wobei die Rippen (25) einstückig mit der Buchse (24) ausgebildet sind, während der Kopf (5), das Gewinde (13) und die zumindest eine Rippe (15) einstückig mit dem Gewindeschaft (4) ausgebildet sind.

11. Haltesystem nach Anspruch 9 oder 10, **dadurch gekennzeichnet, dass** das Halteelement (1) ferner einen Flansch (27) in Form eines Saugnapfes aufweist, der zwischen dem Kopf (5) und dem Gewindeschaft (4) angeordnet ist, einstückig mit dem Gewindeschaft ausgebildet ist und von letzterem radial absteht, sodass er sich radial auf die Außenseite des Kopfes erstreckt; wobei der Saugnapfflansch (27) im Wesentlichen eine kegelstumpfförmige Form und eine dem Kopf zugewandte Konkavität aufweist; wobei der Flansch so ausgelegt ist, dass er mit dem Körperelement (3) druckgekoppelt wird, wenn das zu befestigende funktionelle Element durch die Haltevorrichtung (12) gegen den Flansch gedrückt wird, wodurch das Element mit dem Gewindeschaft gekoppelt wird.

## Revendications

1. Élément de retenue (1) pour la liaison d'un élément fonctionnel de véhicule (2) à un élément de carrosserie de véhicule (3) comprenant une tige filetée (4) et une tête (5) positionnée à une première extrémité (6) de la tige filetée et formée d'un seul tenant avec la tige filetée, la tête (5) étant configurée pour être couplée en cours d'utilisation, par raccord par encliquetage ou à baïonnette, à un trou (7) dans l'élément de carrosserie (3) ; la tige filetée (4) étant configurée pour être couplée en cours d'utilisation à un dispositif de retenue (12) pour l'élément soit par rotation, par vissage et dévissage, ou par raccord par encliquetage, par poussée dans une direction (A) parallèle à la tige ; la tige filetée (4) étant fournie sur au moins une partie de sa longueur axiale avec un filetage continu ou discontinu (13) qui fait saillie radialement à partir d'une surface latérale cylindrique (14) de la tige, sur lequel le filetage (13) est enroulé sous forme hélicoïdale ;
**caractérisé en ce que** la tige (4) est équipée avec au moins une nervure longitudinale (15) qui fait saillie radialement à partir de ladite surface latérale cylindrique (14) sur une hauteur, mesurée radialement, qui est égale ou, de préférence, inférieure à celle dudit filetage (13).

2. Élément de retenue selon la revendication 1, **caractérisé en ce que** ladite au moins une nervure longitudinale 15 s'étend le long d'au moins la plus grande partie d'une extension en longueur dudit filetage (13).

3. Élément de retenue selon la revendication 1 ou 2, **caractérisé en ce que** ladite au moins une nervure (15) est rectiligne et s'étend parallèlement à un axe de symétrie (A) de la tige (4), sur une génératrice de ladite surface latérale cylindrique (14) de la tige, et est composé d'une pluralité de parties rectilignes (16) positionnées de manière adjacente en séquence et en axe les unes par rapport aux autres, étant séparées les unes des autres uniquement par des parties hélicoïdales respectives (18) dudit filetage, lesdites parties rectilignes (16) de ladite au moins une nervure (15) ayant toutes la même forme et la même hauteur mesurées radialement.

4. Élément de retenue selon l'une quelconque des revendications précédentes, **caractérisé en ce que** ladite au moins une nervure (15) a une forme trapézoïdale avec des sommets arrondis en coupe transversale.

5. Élément de retenue selon la revendication 4, **caractérisé en ce que** ladite au moins une nervure (15) a une forme trapézoïdale asymétrique en section transversale, des côtés obliques opposés respectifs (19b, 19c) de ladite section transversale, définissant chacun un flanc latéral opposé respectif de la nervure, ayant des inclinaisons différentes (a et β).

6. Élément de retenue selon la revendication 4 ou 5. **caractérisé en ce qu'**un premier côté oblique (19b) de ladite section transversale, définissant un premier flanc latéral de la nervure, forme un premier angle (a) avec ladite surface latérale cylindrique (14) de la tige, tandis qu'un deuxième côté oblique (19c) de ladite section transversale, opposé au premier et définissant un deuxième flanc latéral de la nervure, forme un deuxième angle (β), plus grand que le premier angle, avec ladite surface latérale cylindrique (14) de la tige ; ledit premier angle faisant face à une direction de vissage (Av) pour ledit filetage, tandis que ledit deuxième angle fait face à une direction de dévissage (Sv) pour ledit filetage, d'une manière telle qu'un couple requis en cours d'utilisation pour le vissage de la tige (4) dans ledit dispositif de retenue (12) est inférieur au couple requis en cours d'utilisation pour le dévissage de la tige (4) dudit dispositif de retenue.

7. Élément de retenue selon la revendication 4 **caractérisé en ce que** ladite tige (4) est fournie avec une pluralité de nervures longitudinales (15), parallèles entre elles, qui font saillie radialement à partir de ladite surface latérale cylindrique (14), chacune sur une hauteur, mesurée radialement, inférieure à celle dudit filetage (13), et qui sont agencées pour être espacées les unes des autres circonférentiellement à un pas régulier ou variable ; les hauteurs de chacune desdites nervures augmentant progressivement dans une direction de vissage pour ledit filetage (13), et par conséquent diminuant progressivement dans une direction de dévissage pour chaque filetage, d'une manière telle qu'un couple requis en cours d'utilisation pour le vissage de la tige (4) dans ledit dispositif de retenue est inférieur au couple requis en cours d'utilisation pour le dévissage de la tige dudit dispositif de retenue.

8. Élément de retenue selon l'une quelconque des revendications précédentes, **caractérisé en ce que** ladite au moins une nervure longitudinale (15) fait saillie radialement à partir de ladite surface latérale cylindrique (14) sur une hauteur telle qu'une extrémité terminale de la nervure, définie par une face sensiblement plate ou arrondie (20), positionnée sensiblement parallèle à une génératrice de ladite surface latérale cylindrique (14) de la tige, est positionnée de manière radialement adjacente à un sommet radialement extérieur (21) dudit filetage.

9. Système de retenue (22) pour la liaison d'un élément fonctionnel de véhicule (2) à un élément de carrosserie de véhicule (3) comprenant un premier trou (7) dans l'élément de carrosserie (3) ; un deuxième trou (23), qui est un trou traversant, dans l'élément fonctionnel ; un élément de retenue (1) constitué d'une tige filetée (4) et d'une tête (5) positionnée à une première extrémité (6) de la tige filetée et formé d'un seul tenant avec la tige filetée, la tête étant configurée pour être couplée, par raccord par encliquetage ou à baïonnette, audit premier trou (7), et la tige filetée (4) étant configurée pour être couplée audit deuxième trou (23) en le traversant ; et un dispositif de retenue (12) pour l'élément fonctionnel, constitué d'une douille (24) équipée à l'intérieur avec au moins une paire d'ailerons déformables élastiquement (25) configurée pour être couplée soit par rotation, par vissage et dévissage, ou par raccord par encliquetage comme résultat d'une force axiale dans une direction parallèle à ladite tige filetée (4) ; la tige filetée étant fournie sur au moins une partie de sa longueur axiale avec un filetage continu ou discontinu (13) qui fait saillie radialement à partir d'une surface latérale cylindrique (14) de la tige, sur laquelle le fil est enroulé sous forme hélicoïdale ;
**caractérisé en ce que** la tige est fournie avec au moins une nervure longitudinale (15) qui fait saillie à partir de ladite surface latérale cylindrique (14) sur une hauteur, mesurée radialement, qui est égale ou inférieure à celle dudit filetage (13) ; lesdites ailettes (25) étant configurées pour interagir avec des flancs latéraux inclinés opposés (19b, 19c) de ladite au moins une nervure (15), chacun d'eux ayant une première et une deuxième inclinaisons respectivement, qui sont différentes l'une de l'autre, afin d'être progressivement courbé vers une paroi latérale radialement interne (26) de la douille comme résultat d'une rotation relative entre la douille et la tige filetée, de sorte que les ailettes (25) puissent se déplacer avec une action d'encliquetage sur ladite au moins une nervure ; lesdites première et deuxième inclinaisons étant sélectionnées de telle manière qu'un couple requis pour visser la tige (4) dans ledit dispositif de retenue est inférieur au couple requis pour dévisser la tige dudit dispositif de retenue.

10. Système de retenue selon la revendication 9, **caractérisé en ce que** lesdits élément de retenue (1) et dispositif (12) sont réalisés par moulage à partir d'une matière plastique synthétique, lesdites ailettes (25) étant formées d'une seule pièce avec ladite douille (24), tandis que ladite tête (5), ledit filetage (13) et ladite au moins une nervure (15) sont formés d'une seule pièce avec ladite tige filetée (4).

11. Système de retenue selon la revendication 9 ou 10, **caractérisé en ce que** ledit élément de retenue (1) comprend en outre un rebord (27) conformé sous la forme d'une coupelle d'aspiration, positionné entre la tête (5) et la tige filetée (4), formé d'une seule pièce avec la tige filetée et faisant saillie radialement à partir de celle-ci afin de s'étendre radialement à l'extérieur de la tête ; ledit rebord coupelle d'aspiration (27) ayant sensiblement une forme tronçonique et une concavité faisant face à ladite tête ; le rebord étant configuré pour être couplé par pression audit élément de corps (3) lorsque l'élément fonctionnel à fixer est poussé par ledit dispositif de retenue (12) contre le rebord, en couplant ainsi l'élément à ladite tige filetée.
